# EUROPEAN PATENT APPLICATION

(11) **EP 4 173 763 A1**
(43) Date of publication of application: **03.05.2023**
(21) Application number: 21878766.1
(22) Date of filing: 17.07.2021
(51) Int. Cl.: B25J 9/00, G05B 19/423, B23K 9/12

(54) **COLLABORATIVE ROBOT FOR WELDING APPLICATIONS**

(71) Applicant: GARMO INSTRUMENTS, SL, 50016 Zaragoza (ES)
(72) Inventor: GARCIA DEL VILLAR, Pablo Alberto, 50016 Zaragoza (ES)
(74) Representative: Vargas Vilardosa, Antonio
(86) International application number: PCT/ES2021/070531
(87) International publication number: WO 2023/002066

(57) **Abstract**

The invention consists of an accessory for the collaborative robot for welding applications that, using the basic structure common in these robots, incorporates a sensor (5) that is used as a means of assistance in the manual guidance for programming/training the robot. This is a positioning sensor (5) that is linked to the welding torch (4) through a support (6). This allows for the redefinition of the program coordinates at the beginning of each welding process, as well the use of the same sensor, for real-time monitoring of the welding head during the welding process.

## Description

### OBJECT OF THE INVENTION

The present invention refers to a collaborative robot for welding applications that, based on the basic structure common in these robots, incorporates a series of new structural elements that make it suitable to facilitate the training process of the welding process. In addition to this training, during the welding process it can correct the possible deviations due to errors in the positioning of the parts, by movements of the metal or of the robot itself.

### BACKGROUND OF THE INVENTION

While automated industrial robots are known to use guided sensors to correct the path of the robot during welding, as well as robots that use a sensor to locate the position of the parts and join them, no collaborative robots are known in which this technology is applied.

The use of collaborative welding robots is a novelty that is growing. Their programming/training has to be carried out by a skilled welding operator since it is necessary to define the trajectory and angles manually, but extensive robotic knowledge is not needed for this programming, this being their main advantage over industrial robots.

industrial or collaborative robots are mounted on fixed surfaces, as a non-stable surface causes reference problems between parts and robots because it is a system subjected to position variations.

However, the use of sensors to detect the joint during the training/programming process with manual guidance is something that did not exist up to now.

### DESCRIPTION OF THE INVENTION

The collaborative robot for welding applications that is proposed fills the technical vacuum described above.

To do this, based on the conventional structuring of a collaborative robot for welding applications, the invention focuses its characteristics on the fact that a sensor is installed by means of a support or holding device near the tip of the robot's welding torch.

This sensor allows for a new programming/training process for the collaborative robot.

More specifically, the operator guides the torch in front of the joint where welding is required, using as a reference a light beam or mechanical element from the sensor.

The sensor will take a series of measurements as it advances longitudinally.

In this way, the profile is known prior to the welding process, then generating an optimized trajectory based on the measurements taken previously.

The trajectory that the operator executes must be within the limitations of the sensor's vision, but an expert adjustment of this trajectory will not be necessary. It is recommended to have visual assistance to indicate the operational mode of the robot.

At the beginning of the welding process, the robot can use the same sensor to take reference measurements and locate the part, without the need to use another sensor.

During the welding along the profile, small corrections are made in real time on the position of the torch depending on the measurements obtained by the sensor.

Ultimately, and unlike industrial robots, an opportunity becomes available to use these sensors differently, not to find or correct the weld but to teach (program) the robot where it has to weld.

### DESCRIPTION OF THE DRAWINGS

To complement the description that will be made below and in order to provide a better understanding of the characteristics of the invention, according to a preferential example of its practical realization, a plan is attached as an integral part of that description, where, in an illustrative but not limitative manner, the following has been shown:

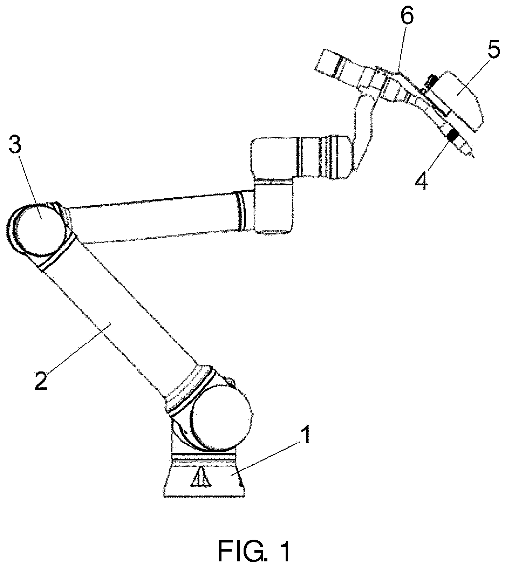

Figure 1.- Shows a side elevation view of a collaborative robot for welding applications made according to the object of the present invention.

### PREFERRED EXECUTION OF THE INVENTION

In the view of the indicated figure, it can be seen that the invention is based on the conventional structuring of a collaborative robot for welding applications, which establishes a base (1) anchored to a fixed or moving surface, associated with an arm (2) with a series of motorized joints (3), whose free end is linked to a welding torch (4).

Thus, according to the invention, it has already been planned that in order to program/train the robot for the successive welding processes, by manual guiding by an operator, at least one sensor (5) will be used, which is linked to the welding torch (4) through a support (6).

This sensor (5) is used to detect the weld joint during the programming/training process, for successive welding processes.

Thus, during the programming/training phase by manual guidance, a series of measurements/references are collected that are subsequently used for the welding trajectory tracing.

This also allows the use of the same sensor (5) that through manual guidance referenced the part and thus redefine the program coordinates at the beginning of each welding process, using the same sensor, for real-time monitoring of the welding head during the welding process.

Finally, it should be noted, as referenced above, that the base of the robot can be mounted on moving surfaces as it can identify the reference points.

## Claims

1. Collaborative robot for welding applications, which, being of the type that includes a base (1) associated with an arm (2) with a series of (3) motorized joints, whose free end is linked to a welding torch (4), is **characterized by** the fact that as a means of assistance in manual guidance for programming/training the robot, it includes at least one positioning sensor (5), which is linked to the welding torch (4) through a support (6).
